Europäisches Patentamt

European Patent Office

Office européen des brevets

(19)

(11) Numéro de publication: **0 077 519**
**A1**

(12) # DEMANDE DE BREVET EUROPEEN

(21) Numéro de dépôt: 82109427.3

(22) Date de dépôt: 12.10.82

(51) Int. Cl.³: **B 01 D 53/18**
**B 65 D 90/30**

(30) Priorité: 16.10.81 FR 8119453

(43) Date de publication de la demande:
27.04.83 Bulletin 83/17

(84) Etats contractants désignés:
BE CH DE LI NL

(71) Demandeur: COMPAGNIE GENERALE
D'AUTOMATISME C.G.A. ALCATEL, Société anonyme
dite:
12, rue de la Baume
F-75008 Paris(FR)

(72) Inventeur: Salaün, André
40, rue Théodule Ribot
F-92700 Colombes(FR)

(74) Mandataire: Weinmiller, Jürgen et al,
Zeppelinstrasse 63
D-8000 München 80(DE)

(54) Dispositif de récupération d'hydrocarbures.

(57) Il comporte une tour de lavage (2) recevant les gaz contenant les hydrocarbures et de l'air entrainés au cours du chargement de moyens de transport d'essence, cette tour étant surmontée d'une cheminée d'évacuation (5) de l'air des gaz et disposée sur une cuve (3), un dispositif d'arrosage (4) en essence portée à une température de -40°C à -25°C étant disposé dans ladite tour (2), cette essence absorbant et condensant les hydrocarbures des gaz, l'essence s'écoulant dans la cuve (3) étant périodiquement soutirée et acheminée vers un filtre (20) de séparation des cristaux de glace, une alimentation en essence à température ambiante étant par ailleurs prévue dans le circuit d'absorption.

L'invention est mise en oeuvre pour récupérer les hydrocarbures échappant de wagons-citernes au cours de leur chargement en essence.

EP 0 077 519 A1

## Dispositif de récupération d'hydrocarbures

La présente invention concerne un dispositif de récupération d'hydrocarbures, notamment d'hydrocarbures en phase vapeur ayant tendance à s'échapper dans l'atmosphère en particulier au cours d'opérations de remplissage de wagons-citernes utilisés pour le transport de l'essence soit du type ordinaire, soit du type super-carburant.

En effet, il a été démontré que de telles pertes sont loin d'être négligeables, car elles sont de l'ordre de 1°/oo en hiver et de 2°/oo en été.

En outre, les hydrocarbures ainsi volatilisés dans l'atmosphère incommodent le personnel chargé de telles opérations de manutention et peuvent même occasionner à la longue des intoxications assez graves.

Pour pallier de tels inconvénients, diverses solutions ont été étudiées.

En particulier, on a proposé de mettre en contact les gaz échappant des wagons-citernes, donc de l'air renfermant des hydrocarbures, avec du carbone actif qui les adsorbe. Puis on effectue une désorption desdits gaz au moyen de vapeur d'eau ; après condensation on sépare les hydrocarbures de l'eau. Cependant dans un tel procédé, le carbone subit un échauffement notable, entraînant des risques d'incendie, voire même d'explosions.

On a également suggéré d'effectuer un lavage des gaz par des huiles lourdes qui les absorbent, puis à procéder à une distillation sous vide pour récupérer les hydrocarbures légers.

Un tel procédé est relativement complexe, et présente en outre un prix de revient élevé.

Il a également été proposé de saturer en premier lieu les gaz en essence afin que leur teneur en hydrocarbures soit amenée au delà de leur limite supérieure d'inflammabilité ; on réalise ensuite une compression et un refroidissement de l'ensemble de manière à éliminer l'eau et les hydrocarbures lourds. Puis les gaz sont absorbés dans un séparateur renfermant de l'essence à une température de -12°C environ. L'air est éliminé et évacué à l'extérieur, et l'essence du gaz absorbée. L'essence présente dans l'absorbeur, circule en continu en circuit fermé, entre un dispositif de réfrigération et ledit absorbeur, et le volume d'essence est maintenu constant par apport d'essence fraîche.

Cependant, un tel dispositif dans lequel on met en oeuvre un cycle de compression et une saturation des gaz en essence présente par suite de ces dernières opérations des risques d'inflammation, voire même d'explosions.

En outre les pressions mises en oeuvre necessitent de donner aux parois des divers récipients, tubes, canalisations et autres une épaisseur relativement importante entraînant une augmentation de l'encombrement ainsi que de son prix de revient.

La présente invention se propose de remédier aux inconvénients précemment évoqués, et elle a pour but un dispositif apte à récupérer les vapeurs d'hydrocarbures selon un rendement et une fiabilité élevés, un tel dispositif présentant par ailleurs une structure simple, aisément automatisable, d'un prix de revient modique, et une très grande sécurité.

L'invention a donc pour objet un dispositif de récupération d'hydrocarbures à partir de gaz comprenant lesdits hydrocarbures en phase vapeur et de l'air, entrainés au cours du chargement en essence de moyens de transport tels que des wagons-citernes, caractérisé par le fait qu'il comporte une tour de lavage recevant lesdits gaz à sa base, renfermant un garnissage, disposée sur une cuve, et surmontée d'une cheminée d'évacuation d'air, un dispositif d'arrosage en essence étant prévu au dessus dudit garnissage, un groupe réfrigérant apte à refroidir ladite essence à une température comprise entre -40 et -25°C sensiblement communiquant avec le bas de ladite cuve d'une part et avec ledit dispositif d'arrosage d'autre part, une alimentation dudit groupe réfrigérant en essence à température ambiante, des moyens de séparation des cristaux de glace de l'essence récupérée, étant mis par ailleurs périodiquement en communication avec ladite cuve, de sorte que l'essence froide s'écoulant dudit dispositif d'arrosage absorbe et condense les hydrocarbures desdits gaz, tandis que l'air est évacué par l'intermédiaire de ladite cheminée, cette essence s'accumulant dans la cuve jusqu'à un niveau prédéterminé, et étant à ce moment au moins en partie acheminée vers lesdits moyens de séparation des cristaux de glace.

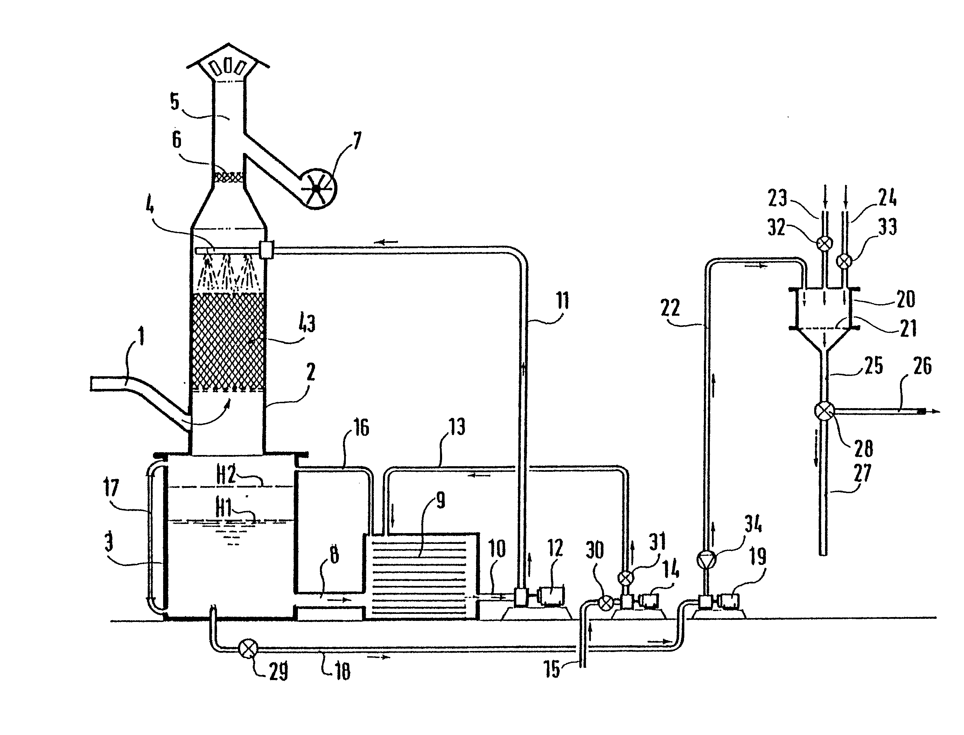

L'invention sera décrite ci-après plus en détail à l'aide d'un exemple de réalisation en référence à l'unique dessin annexé.

Une tubulure 1 amène des gaz échappant de wagons-citernes (non représentés) en cours de chargement en essence au moyen de tout dispositif approprié. Lesdits gaz comprennent donc de l'air, de la vapeur d'eau et des hydrocarbures saturés notamment des hydrocarbures légers dissous dans l'essence, dont le nombre d'atomes de carbone varie entre 1 et 6. En particulier ces hydrocarbures comportent en majorité du butane et du pentane normaux ainsi que leurs isomères. Ladite tubulure aboutit à la base d'une tour de lavage 2 disposée sur une cuve 3.

La tour de lavage 2 comporte un garnissage 43 disposé en dessous d'un dispositif d'arrosage en essence 4, et elle est surmontée d'une cheminée 5 comportant un matelas dévésiculeur 6, de l'air pouvant être insufflé dans la cheminée 5 au moyen d'un ventilateur 7.

Ladite cuve 3 communique au moyen d'une canalisation d'entrée 8 avec un groupe réfrigérant 9 apte à assurer une température de l'essence de l'ordre de -40°C à -25°C environ, tandis qu'une canalisation de sortie 10 met en communication ledit groupe réfrigérant 9 avec une tubulure 11 alimentant le dispositif d'arrosage en essence 4 précédemment décrit, un premier groupe de pompage 12 assurant l'acheminement de l'essence dans cette tubulure 11.

Par ailleurs, le groupe réfrigérant 9 peut être alimenté par l'intermédiaire d'une tubulure 13 en essence à température ambiante dite "essence neuve" au moyen d'un deuxième groupe de pompage 14, cette essence étant acheminée de l'extérieur par l'intermédiaire d'une conduite 15. On voit également sur la figure un conduit 16 d'équilibrage de pressions faisant communiquer le groupe réfrigérant 9 avec la partie supérieure de la cuve 3 dont le niveau liquide à l'intérieur de cette dernière peut être repéré au moyen d'un indicateur de niveau 17.

En outre une tubulure 18 assure la communication entre le fond de la cuve 3 et un troisième groupe de pompage 19 apte à acheminer le liquide vers un filtre à glace 20 comportant une toile filtrante 21, et cela par l'intermédiaire d'une canalisation 22.

A la partie supérieure du filtre 20 débouche d'une part une canalisation 23 d'alimentation en gaz comprimé, par exemple un gaz neutre tel que de l'azote ou du gaz carbonique comprimé, et d'autre part une canalisation 24 d'admission de vapeur d'eau à une température de 110 à 120°C environ.

La partie inférieure du filtre 20 débouche dans une canalisation 25 pouvant être mise en communication soit avec un premier conduit 26, soit avec un deuxième conduit 27 et celà au moyen d'une vanne à trois voies 28.

L'installation qui vient d'être décrite comporte en outre des organes annexes tels que des vannes d'ouverture et de fermeture 29, 30, 31, 32, 33 interposées sur les tubulures ou conduites 18, 15, 13, 23, et 24 respectivement, ainsi qu'un clapet anti-retour 34 sur la canalisation 22.

Un tel dispositif fonctionne de la façon suivante :

Lors de la mise en route, la cuve 3 notamment et le groupe réfrigérant 9 sont remplis d'essence jusqu'à un niveau $H_1$, cette essence étant à une température comprise entre à -25°C à -40°C environ. La vanne 29 disposée sur la tubulure 18 est fermée et le groupe de pompage 19 à l'arrêt.

Les gaz sont introduits dans la tour de lavage 2 par la tubulure 1 et mis donc en contact avec l'essence froide s'écoulant du dispositif d'arrosage 4 et celà au sein du garnissage 43, cette essence froide étant acheminée par la tubulure 11 au moyen du groupe de pompage 12, et provenant du groupe réfrigérant 9 communiquant lui-même avec la cuve 3 par l'intermédiaire de la canalisation 8. Les hydrocarbures des gaz sont donc absorbés et condensés par l'essence froide qui s'écoule dans la cuve 3.

Le niveau de l'essence dans ladite cuve 3 augmente donc ainsi d'ailleurs que sa tension de vapeur, car rappelons-le, les gaz contiennent en majeure partie des hydrocarbures légers.

Dans le but de maintenir cette tension de vapeur à une valeur convenable permettant un bon rendement de récupération, on introduit dans le circuit, l'essence dite "essence neuve" (de préférence non chargée en butane) cette essence étant acheminée de l'extérieur vers le groupe réfrigérant 9 au moyen du deuxième groupe de pompage 14 et par l'intermédiaire des canalisations et conduites 13 et 15.

Dans le même temps, l'air des gaz est éliminé dans l'atmosphère par l'intermédiaire de la cheminée 5, le matelas 6 arrêtant les vésicules liquides.

On notera en outre que l'air insufflé par le ventilateur 7 à pour objet de diluer l'air provenant des gaz lesquels renferment encore des hydrocarbures très légers. De la sorte, la cheminée 5 n'évacue dans l'atmosphère que des gaz ininflammables, éliminant ainsi tout risque d'inflammation, notamment en cours d'orage.

Lorsque le niveau de l'essence dans la cuve 3 atteint le niveau $H_2$ on arrête le groupe de pompage 14 interrompant ainsi le débit "d'essence neuve" et on met en route le groupe de pompage 19 après ouverture de la vanne 29. On soutire ainsi de la cuve 3 le liquide que l'on achemine par l'intermédiaire de la tubulure 18 et de la canalisation 22 dans le filtre à glace 20 et celà jusqu'à ce que le niveau $H_1$ dans la cuve 3 se trouve rétabli. A ce moment on arrête le groupe de pompage 19 et on ferme la vanne 29. On remet alors le groupe de pompage 14 en route pour rétablir le cycle d'absorption des gaz.

L'essence accumulée dans le filtre 20 traverse la toile filtrante 21 sur laquelle elle abandonne ses cristaux de glace formés par condensation de la vapeur d'eau contenue dans les gaz.

Puis, dans un premier temps, on ouvre la vanne 32 (la vanne 33 étant fermée) et on injecte dans le filtre 20 le gaz comprimé par l'intermédiaire de la canalisation 23, la vanne à trois voies 28 étant mise en position telle qu'elle fasse communiquer la canalisation 25 avec le premier conduit 26. L'essence récupérée, chargée en produit léger, emprunte donc ledit conduit 26 et est envoyée dans un bac de stockage ou dans le wagon-citerne en cours de chargement.

Dans un deuxième temps on ferme la vanne 32, on ouvre la vanne 33 et on injecte dans le filtre 20 de la vapeur d'eau par l'intermédiaire de la canalisation 24, la vanne à trois voies 28 étant mise en position telle qu'elle fasse communiquer la canalisation 25 avec le conduit 27.

De la sorte les cristaux de glace déposés sur la toile filtrante 21 sont liquéfiés, et l'eau résultante est évacuée par l'intermédiaire du deuxième conduit 27.

La toile 21 du filtre 20 est ensuite séchée en injectant de l'air comprimé par l'intermédiaire de la canalisation 23, et ainsi de suite.

Bien entendu, la séquence opérationnelle décrite dans ce qui précédé est automatisée et régulée par tout dispositif approprié.

On va décrire maintenant à titre d'exemple nullement limitatif les caractérisitiques d'un mode de réalisation concret du dispositif selon l'invention.

Groupe réfrigérant 9    : Refroidissement par air.
                           Puissance 120000 frigories/heure

Cuve 3    : Diamètre 2 m, hauteur 2,5 m. Niveaux $H_1$ et $H_2$ disposés à 1 et 2 m de hauteur respectivement

Tour de lavage 2    : Diamètre 1,13 m, hauteur de la partie cylindrique 3,5 m.

Cheminée 5    : Diamètre 0,5 m, hauteur 1,5 m

Ventilateur 7    : Débit 5000 $m^3$/heure sous pression de 100 mm de colonne d'eau

Groupe de pompage 12    : Débit 50 $m^3$/heure, hauteur de remontée 6 m de colonne d'eau

Groupe de pompage 14    : Débit de 3 à 6 $m^3$/heure réglable par la vanne 30

Groupe de pompage 19    : Débit 6 $m^3$/heure, hauteur de remontée 6 m de colonne d'eau

Filtre 20    : Diamètre 800 mm, hauteur 500 mm
                Pression de service 2 bars

Ces divers organes ainsi que les conduites canalisations, tubulures et autres sont confectionnés en métal de façon à éviter toute accumulation de charges électrostatiques, notamment en acier inoxydable 18/8

Débit de gaz acheminé par la tubulure 1 : 300 $m^3$/heure en moyenne pouvant atteindre 1000 $m^3$/h.

Composition volumique du gaz : 32% d'hydrocarbures et 68% d'air humide à 21°C pour du supercarburant

Quantité d'essence récupérée : 238 kg/heure en moyenne à 21°C de supercarburant

Rendement de récupération : 92%, avec débit d'essence neuve de 3 $m^3$/heure.

L'invention est avantageusement mise en oeuvre dans les postes de chargement de wagons-citernes, en essence ordinaire ou en supercarburant.

REVENDICATIONS

1/ Dispositif de récupération d'hydrocarbures à partir de gaz comprenant lesdits hydrocarbures en phase vapeur et de l'air, entrainés au cours du chargement en essence de moyens de transport tels que des wagons-citernes, caractérisé par le fait qu'il comporte une tour de lavage (2) recevant lesdits gaz à sa base renfermant un garnissage (43), disposée sur une cuve (3), et surmontée d'une cheminée (5) d'évacuation d'air, un dispositif d'arrosage en essence (4) étant prévu au dessus dudit garnissage (43), un groupe réfrigérant (9) apte à refroidir ladite essence à une température comprise entre -40°C et -25°C sensiblement communiquant avec le bas de ladite cuve (3) d'une part et avec ledit dispositif d'arrosage (4) d'autre part, une alimentation (13) dudit groupe réfrigérant (9) en essence à température ambiante, des moyens de séparation des cristaux de glace (20) de l'essence récupérée, étant mis par ailleurs périodiquement en communication avec ladite cuve (3), de sorte que l'essence froide s'écoulant dudit dispositif d'arrosage (4) absorbe et condense les hydrocarbures desdits gaz, tandis que l'air est évacué par l'intermédiaire de ladite cheminée (5), cette essence s'accumulant dans la cuve (3) jusqu'à un niveau prédéterminé ($H_2$) , et étant à ce moment au moins en partie acheminée vers lesdits moyens de séparation des cristaux de glace (20).

2/ Dispositif selon la revendication 1, caractérisé par le fait que lesdits moyens de séparation des cristaux de glace comportent un filtre (20), une première canalisation d'alimentation en gaz comprimé (23) et une deuxième canalisation d'admission de vapeur d'eau chaude (24) débouchant toutes deux à la partie supérieure du filtre (20), la partie inférieure dudit filtre pouvant être mise en communication soit avec un premier conduit d'évacuation (26) de l'essence récupérée par admission dudit gaz comprimé, soit avec un deuxième conduit (27) d'évacuation de l'eau résultant de la fusion des cristaux de glace retenus par la toile filtrante (21) du filtre (20) et celà par admission de ladite vapeur d'eau chaude.

3/ Dispositif selon l'une des revendications 1 et 2, caractérisé par le fait qu'il comporte un ventilateur d'insufflation d'air (7) à la base de ladite cheminée (5) apte à diluer l'air desdits gaz avant leur évacuation dans l'atmosphère.

4/ Dispositif selon l'une des revendications 1 à 3, caractérisé par le fait que ladite essence à température ambiante alimentant ledit groupe réfrigérant (9) comporte une teneur minimale en hydrocarbures légers, notamment en butanes.

0077519

**RAPPORT DE RECHERCHE EUROPEENNE**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| | --- | | B 01 D   53/18 |
| A | FR-A-2 117 442  (PARKER HANNIFIN) <br> * Figure 1; page 2, ligne 37 - page 8, ligne 34 * | 1 | B 65 D   90/30 |
| | --- | | |
| A | GB-A-1 430 655 (PARKER-HANNIFIN) | | |
| | --- | | |
| A | US-A-2 849 150  (A.H. TOMPKINS) | | |
| | ----- | | |

**DOMAINES TECHNIQUES RECHERCHES (Int. Cl. ³)**

B 01 D   53/00
B 65 D   90/00
B 67 D    5/00

Le présent rapport de recherche a été établi pour toutes les revendications

| Lieu de la recherche <br> LA HAYE | Date d'achèvement de la recherche <br> 20-01-1983 | Examinateur <br> BOGAERTS M.L.M. |
|---|---|---|

OEB Form 1503 03.82

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
 
& : membre de la même famille, document correspondant